(19) Europäisches Patentamt

European Patent Office

Office européen des brevets

(11) **EP 1 674 722 A1**

## (12) DEMANDE DE BREVET EUROPEEN

(43) Date de publication:
**28.06.2006 Bulletin 2006/26**

(51) Int Cl.:
*F03B 17/06* (2006.01)

(21) Numéro de dépôt: **04447286.8**

(22) Date de dépôt: **22.12.2004**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(71) Demandeur: **Rutten, Jean**
**4671 Blegny (Mortier) (BE)**

(72) Inventeur: **Rutten, Jean**
**4671 Blegny (Mortier) (BE)**

(74) Mandataire: **pronovem et al**
**Office Van Malderen**
**Bld. de la Sauveniére 85/043**
**4000 Liège (BE)**

Remarques:
Revendications modifiées conformément à la règle 86 (2) CBE.

(54) **Générateur hydraulique flottant**

(57) Une machine hydraulique flottante est présentée, qui est utilisable sur fleuve ou rivière, pour transformer l'énergie cinétique d'un flux d'eau en énergie mécanique, électrique ou autre. Cette machine comprend au moins un flotteur (3) pouvant être amarré solidement dans le courant du fleuve ou de la rivière, ledit flotteur (3) portant un palier recevant un arbre (2) d'une roue à aubes (1) entraînée par la force du courant, caractérisée en ce qu'elle comprend une structure rigide inscrite dans un cylindre de diamètre donné (d) supportant des paliers d'articulation (P) situés à la distance du rayon dudit cylindre (R=d/2) sur lesquels sont montés pivotants des aubages pendulaires (1,1'), via un arbre (2') solidaire de chaque aubage, lesdits aubages (1,1') étant en outre affectés d'un lest pondéreux ($P_e$) de densité supérieure à celle de l'eau.

fig 2.a

EP 1 674 722 A1

**Description**

**Objet de l'invention**

La présente invention se rapporte à un nouveau type d'hydrogénérateur flottant, de dimensions réduites par rapport aux machines de puissance égale dans l'état de la technique et capable de développer de fortes puissances, typiquement supérieures à 500 kW.

**Arrière-plan technologique et état de la technique**

Les roues hydrauliques flottantes sont connues depuis le 19ème siècle. Déjà à l'époque, on trouve des roues flottantes actionnant des "moulins-bateaux" sur l'Elbe, le Danube, le Rhône, etc. Ces cours d'eau présentent en effet des vitesses de courant pouvant aller jusqu'à 4 m/s sur certaines sections non navigables. En fait, on retrouve trace de l'idée de moulins flottants dès le 16ème siècle.

Dans tous les cas, les puissances développées par ces roues hydrauliques ne dépassaient guère 5 à 6 kilowatt. Ces "moulins-bateaux" étaient amarrés sur des rivières navigables et flottaient sur des cours d'eau dont la vitesse de courant était forcément faible pour permettre la navigation par halage.

On connaît le brevet d'invention français n° FR 1 175 566, publié le 27.03.1959. Ce brevet est bien représentatif de l'état de la technique en la matière. Il décrit en effet une machine hydraulique flottante sur fleuve ou rivière destinée à la production d'énergie mécanique, électrique ou autre, sans avoir à construire un barrage ou d'autres installations coûteuses. La machine comprend au moins un flotteur pouvant être amarré solidement dans le courant d'une rivière. Ce flotteur porte d'une part, un palier recevant un arbre d'une roue à aubes et d'autre part, une machine entraînée, depuis la roue à aubes, par une transmission convenable, l'ensemble constitué par la roue à aubes, la transmission et la machine étant protégé adéquatement des projections d'eau.

Le 23.12.1999, Rutten S.A. a déposé le modèle n° 06311-10 pour un générateur flottant. Le numéro d'enregistrement du modèle est 31348-00. Le nom "Hydraulienne" a été déposé comme marque Benelux le 13.12.1999 sous le n° 952475. Enfin, une nouvelle demande de brevet belge, non encore publiée à ce jour, a été déposée le 24.12.2002 sous le n° BE 2002/0749. Elle concerne des unités flottantes de grandes puissances, c'est-à-dire quelques centaines de kilowatt et non plus de petites unités de quelques kilowatt, conçues initialement pour alimenter en électricité des populations isolées, en Afrique centrale par exemple, l'énergie produite étant principalement utilisée pour l'éclairage et la force motrice.

Dans toutes les machines existantes, si on souhaite générer de grandes puissances, telles que 500 kW ou plus par exemple, il faut toujours réunir les caractéristiques suivantes :

- un cours d'eau rapide, avec une vitesse de l'ordre de 2 à 3 m/s, voire plus ;
- un tirant d'eau important, 2 à 3 m, voire plus (le tirant d'eau est défini ici comme étant la distance verticale entre le niveau de flottaison et l'extrémité immergée inférieure de la roue à aubes) ;
- une largeur importante de la roue, 20 à 32 m ou plus (la largeur est la dimension transversale de la machine par rapport au courant).

En effet, une valeur élevée de l'énergie cinétique produite par le cours d'eau est évidemment essentielle pour le bon fonctionnement de la machine. Il suffit par exemple d'appliquer par analogie la loi de Betz : la proportion d'énergie mécanique récupérable à partir de l'énergie cinétique du fluide est limitée à 16/27 (ou 59 %). Le tirant d'eau T et la largeur L de la roue hydraulique induisent alors la puissance disponible.

Pour une grande puissance, on est très vite amené à concevoir des roues de très grands diamètres. Un tirant d'eau donné T induit toujours un diamètre D minimum pour la roue.

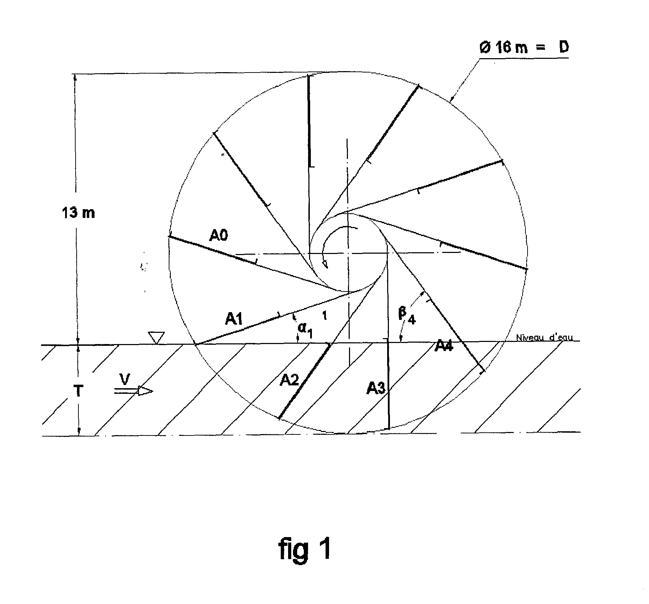

Sur la figure 1, on donne un exemple où un tirant d'eau T de 3 m exige un Ø D de 16 m. Notons les aubages successifs de la roue hydraulique : A0, A1, A2, A3, A4, etc. L'entrée de l'aubage A1 dans le flux, du fait de son angle d'attaque $\alpha_1$ relativement faible, provoque beaucoup de pertes hydrauliques. L'aubage A4 écope alors une certaine quantité d'eau à la sortie. Cette quantité d'eau dépend de la valeur de l'angle $\beta_4$. Plus ce dernier est aigu, plus l'écopage d'eau est important. L'écopage donne alors un contre-couple qui provoque une perte de puissance non négligeable.

Il existe donc une combinaison de $\alpha_1$ et $\beta_4$ idéale provoquant un minimum de pertes d'énergie. Mais, de toute évidence, pour un tirant d'eau donné T, si on veut minimiser les pertes à l'entrée des aubages dans l'eau ainsi qu'à leur sortie de l'eau, il faut adopter de très grands diamètres D (Figure 1).

La puissance générée est proportionnelle au cube de la vitesse de flux, comme cela a été démontré dans de nombreuses théories de l'hydraulique. On a :

$$Puissance = fonction\ (T,\ L,\ V)\ (1),$$

ou encore

$$Puissance = k\ x\ S\ x\ V^3\ (2),$$

k étant un facteur de proportionnalité, S la section utile (S = T x L) et V la vitesse de flux. Ainsi, l'obtention de grandes puissances impose de très grands diamètres pour les machines de l'état de la technique.

Pour fixer les idées, un tirant d'eau T de 3 m induit nécessairement un 0 D de 12 à 16 m, sans quoi les pertes hydrauliques sont trop importantes.

Ce grand diamètre D pour la roue la rend imposante, lourde et coûteuse. Une roue de Ø D égal à 12 m avec un tirant d'eau T de 3 m émerge donc de l'eau d'une hauteur H de 9 m.

Ces dimensions rendent une telle machine difficilement acceptable dans le cadre du respect l'environnement.

Pourtant, pour avoir une puissance appréciable, il faut impérativement opter pour un tirant d'eau ainsi qu'une largeur importants (Figure 1).

Ce problème est tout à fait comparable au problème du dimensionnement des éoliennes de grande puissance. Une grande puissance induit toujours un grand diamètre d'hélice (100 m par exemple) et forcément un mât imposant (typiquement 100 m également).

### Buts de l'invention

La présente invention vise à fournir une solution qui permette de s'affranchir des inconvénients de l'état de la technique.

En particulier, l'invention a pour but de fournir une machine hydraulique tournante et flottante, utilisable comme générateur d'énergie mécanique ou électrique par exemple, qui allie forte puissance générée et dimensions réduites.

Un but complémentaire de l'invention est de fournir un hydrogénérateur qui permette une régulation automatique de la puissance.

### Principaux éléments caractéristiques de l'invention

La présente invention se rapporte à une machine hydraulique flottante, utilisable sur fleuve ou rivière, pour transformer l'énergie cinétique d'un flux d'eau en énergie mécanique, électrique ou autre, comprenant au moins un flotteur pouvant être amarré solidement dans le courant du fleuve ou de la rivière, ledit flotteur portant un palier recevant un arbre d'une roue à aubes entraînée par la force du courant, caractérisée en ce qu'elle comprend une structure rigide inscrite dans un cylindre de diamètre donné supportant des paliers d'articulation situés à la distance du rayon dudit cylindre, sur lesquels sont montés pivotants des aubages pendulaires, via un arbre solidaire de chaque aubage, lesdits aubages étant en outre affectés d'un lest pondéreux de densité supérieure à celle de l'eau.

Selon un premier mode d'exécution préféré de l'invention, l'arbre solidaire de chaque aubage est situé à une extrémité de celui-ci.

De préférence, le lest pondéreux est disposé à l'extrémité de l'aubage opposée à celle où se trouve ledit arbre solidaire de l'aubage.

Les aubages pendulaires soumis à la gravité sont avantageusement configurés pour que le rapport entre la hauteur émergée de la machine et le tirant d'eau soit le plus petit possible, ce qui est optimal du point de vue rendement de la machine. En d'autres termes, pour un tirant d'eau donné, la machine hydraulique à aubages pendulaires émergera le moins possible de la surface du flux dans lequel la machine flotte.

De manière inhérente à l'invention, à l'équilibre en rotation dans le flux, lesdits aubages, en pivotant autour de leur axe, forment un angle avec la verticale qui est directement fonction des efforts hydrauliques produits par ledit flux. Le pivotement correspondant des aubages permet un écrêtage automatique très avantageux de la puissance produite par la roue hydraulique.

Avantageusement, la machine de l'invention comprend n roues et (n+1) flotteurs (n ≥ 1), les flotteurs étant de préférence disposés de part et d'autre de chaque roue à aubes.

Toujours avantageusement, chaque roue à aubes comprend m (m > 2), de préférence 6, aubages pendulaires dont les paliers sont disposés aux sommets d'un polygone régulier.

Un hydrogénérateur selon l'invention comprenant n roues, comprenant chacune m aubages, sera de préférence construit de sorte que deux roues successives soient décalées de $\dfrac{360°}{m \cdot n}$.

Selon un deuxième mode d'exécution préféré de l'invention, l'arbre solidaire de chaque aubage est essentiellement situé légèrement au-dessus du centre de gravité de l'aubage. Cependant, dans ce cas, l'écrêtage de la puissance est inexistant car les aubages restent verticaux durant leur phase de travail, suite à l'équilibrage des forces hydrauliques.

Toujours selon l'invention, la machine hydraulique comprend un déviateur frontal pour dévier les déchets et débris flottant au fil de l'eau, ainsi qu'un point d'ancrage au niveau de la partie la plus avant de ce déviateur pour la fixation d'un câble d'amarrage.

Avantageusement, la roue à aubes est couplée à un récepteur de puissance qui est un alternateur, une pompe ou un engin de levage.

Selon une modalité d'exécution préférée, les flotteurs sont réalisés en acier, en plastique ou toute autre matière permettant de réaliser une poussée d'Archimède suffisante pour compenser le poids de la roue hydraulique. De même, le lest est réalisé de préférence en acier, plomb, béton lourd, béton armé ou en tungstène.

De préférence, les aubages sont réalisés en métal, de préférence encore l'acier ou l'aluminium, en bois, en plastique ou en matériau composite.

Selon une forme d'exécution particulièrement avantageuse de l'invention, chaque aubage est réalisé en matière synthétique souple, de préférence en Keviar® ou polyester, comprenant une alvéole où est logé ledit lest ($P_e$), du côté opposé au palier d'articulation de l'aubage.

**Brève description des figures**

La figure 1 représente schématiquement une vue en coupe d'une roue hydraulique de grande puissance et de grand diamètre, selon l'état de la technique.

Les figure 2.a et 2.b représentent une vue en perspective de deux formes d'exécution préférées de l'hydrogénérateur flottant selon la présente invention.

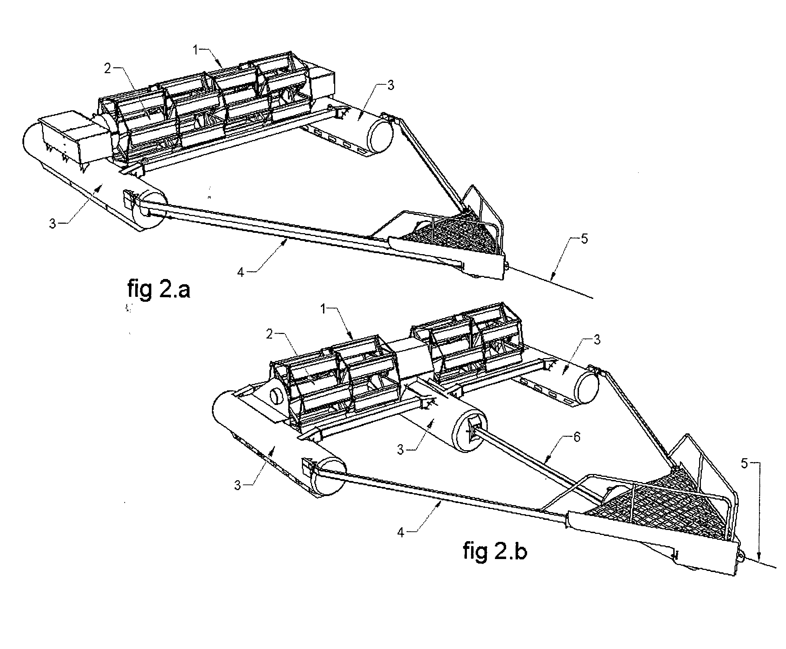

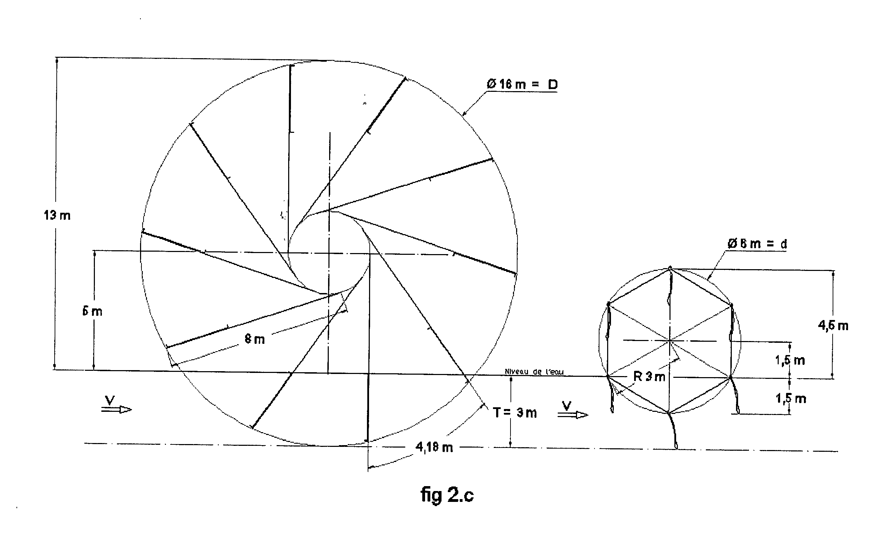

La figure 2.c représente schématiquement une vue en coupe comparative d'une roue hydraulique de l'état de la technique selon la figure 1 et la roue hydraulique de l'invention correspondant à une même puissance fournie.

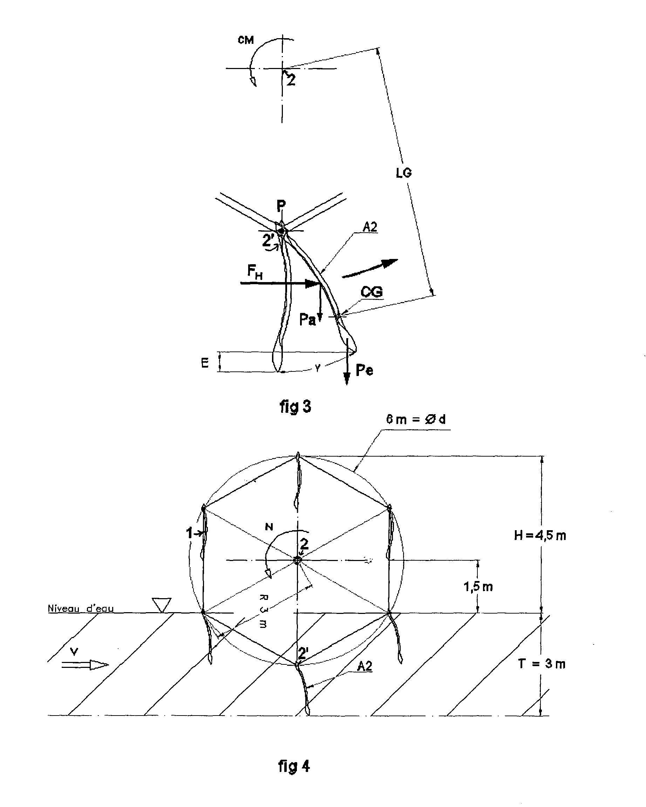

La figure 3 représente schématiquement l'équilibre des forces appliquées à un aubage de roue hydraulique selon la présente invention.

La figure 4 représente encore schématiquement une section de roue d'aubage pendulaire selon l'invention, dans un flux d'eau de vitesse V en amont.

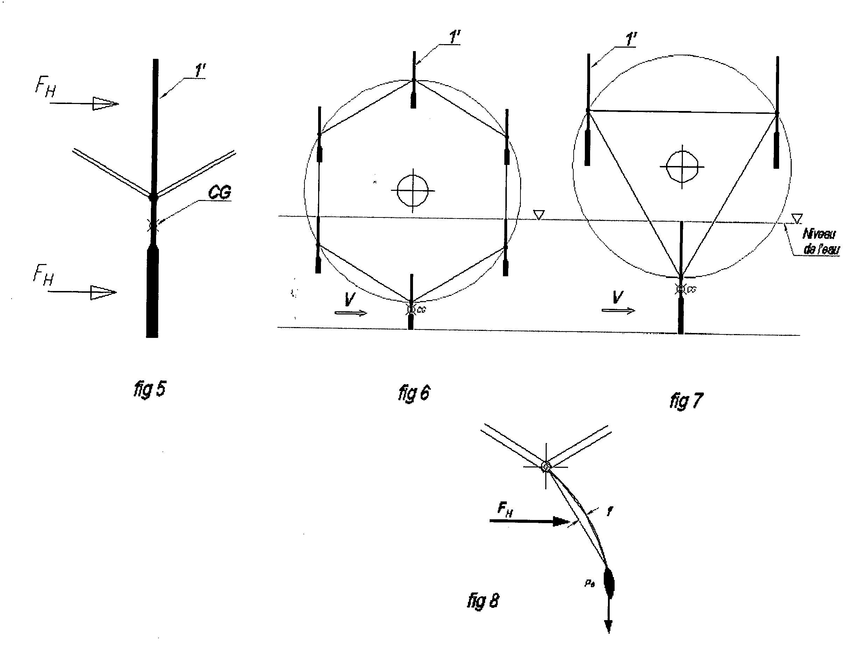

La figure 5 représente schématiquement une forme d'exécution alternative de l'invention, dans laquelle un aubage pivote autour d'un point voisin de son centre de gravité.

Les figures 6 et 7 représentent schématiquement une section de roue d'aubage selon la figure 5, la roue comportant respectivement 6 et 3 aubages.

La figure 8 représente schématiquement un aubage réalisé en toile synthétique (polyester, Kevlar® , etc.) et lesté d'un poids $P_e$.

**Description d'une forme d'exécution préférée de l'invention**

Les figures 2.a et 2.b donnent une vue d'ensemble de l'hydrogénérateur flottant selon l'invention.

L'idée innovante repose essentiellement sur une conception très originale de la roue à aubes permettant de réduire drastiquement ses dimensions.

Comme on peut mieux le voir sur les figures 3 et 4, la machine tournante comprend une série d'aubages 1 présentant à une première extrémité un arbre 2' reposant sur un palier P solidaire de la structure du corps de roue. Cette structure est par exemple une roue composée de rayons et d'entretoises appropriées. La structure de la roue est donc réalisée en treillis. Il peut aussi s'agir de toute structure s'inscrivant dans le cylindre fictif de diamètre d nominal de la roue. Les aubages 1 sont donc, selon l'invention, montés pivotants sur cette structure tournante. Ils sont soumis à l'action de la gravité au repos ou lors de la rotation de la roue, ce qui leur confère un caractère pendulaire.

L'axe 2 de la structure supportant les paliers P est lui-même posé dans des paliers adéquats fixés aux flotteurs 3 (Fig. 2.a ou 2.b). Les flotteurs 3 sont réalisés par exemple en acier, en plastique ou tout autre matière adéquate pour réaliser une poussée d'Archimède suffisante permettant de compenser le poids de la (ou des) roue(s) hydraulique(s).

Selon la puissance nominale désirée, on place soit deux flotteurs (Fig. 2.a), soit trois flotteurs (Fig. 2.b). On peut également concevoir des machines à n>2 roues hydrauliques, par exemple 6 roues, et possédant dans ce cas n+1 flotteurs, dans l'exemple 7 flotteurs.

Si l'on se réfère à la Fig.2.a, on remarque que la "roue" 1 est composée de 4 tranches décalées chacune d'un quart de pas. Comme il y a 4 roues avec 6 aubages chacune, le décalage le plus approprié est de 360°/(4x6) = 15°. Il va de soi que cette disposition est susceptible d'améliorer la régularité du couple produite par la machine.

Enfin, la puissance désirée est directement fonction du tirant d'eau T défini à la figure 1 et de la largeur L de la (ou des) roue(s) hydraulique(s).

Les machines hydrauliques selon l'invention flottent donc au fil de l'eau. Les aubages 1, de par la gravité à laquelle ils sont soumis, plongent quasi verticalement dans le flux lors de la rotation de la roue. Ils sont ainsi soumis aux forces hydrauliques. Ces forces hydrauliques agissent directement sur l'arbre 2 et provoquent un couple moteur $C_M$ qui sera transmis à cet axe (Fig. 3).

L'hydrogénérateur ainsi conçu suit le niveau variable du cours d'eau et de ce fait est insensible aux crues. La machine peut avantageusement produire de l'énergie mécanique ou électrique durant toute l'année. L'hydrogénérateur est amarré à la rive ou dans le fond de la rivière via un câble d'acier 5 adéquat (Fig.2.a et 2.b). L'arrimage peut se faire par exemple via un bloc pondéreux, par exemple en béton ou acier, reposant dans le lit de la rivière.

L'hydrogénérateur possède encore avantageusement un déviateur 4 (Fig. 2.a et 2.b) réalisé de façon robuste pour dévier les débris et les déchets flottant au fil de l'eau. L'ancrage 5 de la machine se fait en général au sommet de ce déviateur.

Ainsi, la présente invention, représentée sur les figures 2.a, 2.b, 2.c, 3 et 4, permet, tout en gardant le même tirant d'eau T et la largeur L de la roue au niveau de la surface de l'eau, de réduire le diamètre D de celle-ci, tout en améliorant le rendement de la roue. En effet, l'entrée de l'aubage 1 dans le flux, comme sa sortie, se fait quasi verticalement, avec un minimum de pertes d'énergie. Il n'y a plus d'écopage de l'eau à la sortie du flux.

Cette nouvelle géométrie réduit drastiquement le diamètre des roues hydrauliques. La figure 2.c donne une comparaison de deux roues de même puissance et de même tirant d'eau (T = 3 m en l'occurrence).

Analysons les forces mises en jeu au niveau d'un aubage particulier. La figure 3 montre un aubage selon l'invention soumis aux forces hydrauliques lors de l'immersion.

Considérons un aubage A2 immergé (Fig. 3 et 4). Celui-ci pivote autour de son axe d'oscillation 2 monté sur le palier P. L'aubage A2 est obligatoirement affecté de son poids $P_a$. Selon l'invention, l'aubage A2 est réalisé de telle façon que son centre de gravité CG soit le plus éloigné possible de son axe de rotation 2' (Fig. 3).

Pour que la distance $L_G$, entre l'axe 2 et le centre de gravité de l'aubage CG, soit la plus grande possible, ledit aubage aura un lest $P_e$.

Le lest $P_e$ est réalisé de préférence en acier, en plomb, en béton lourd, en béton armé, en tungstène ou en tout autre matériau pondéreux dont la densité dépasse celle de l'eau.

Sous l'effort hydraulique $F_H$, dû à l'énergie cinétique du flux, l'aubage A2 pivote autour de son axe 2' jusqu'à réalisation de l'équilibre des différentes forces mises en jeu. Le poids résultant du poids de l'aubage $P_a$ et de celui de son lest $P_e$ est équilibré par la force hydraulique $F_H$ (Fig. 3). La force $F_H$ provoque donc un couple moteur $C_M$ sur la roue, induit via cette force $F_H$.

La roue hydraulique est avantageusement couplée, via un multiplicateur à chaîne, à courroie ou à engrenages, à un alternateur ou à tout autre récepteur de puissance (pompes, engins de levage, etc.).

A partir de la figure 2.c, on voit aisément que les puissances par unité de largeur sont relativement comparables sur les deux machines. Toutefois, dans la machine à aubages pendulaires de l'exemple, le 0 d est 2,6 fois plus petit que le 0 D dans les machines classiques connues dans l'état de la technique.

On peut aussi montrer aisément que :

$$\text{Puissance} = k' \times F_H \times R \times N \quad (3),$$

où k' est un facteur de proportionnalité, R le rayon de la roue et N le nombre de tours effectués par minute. Donc, à puissance constante, si R diminue, N augmente.

De ce fait, la vitesse de rotation de la roue selon l'invention est également 2,6 fois plus grande à puissance égale (v = ωR, où v est la vitesse circonférencielle, ω la vitesse angulaire et R le rayon de la roue). Selon l'invention l'aubage A2 complètement immergé subit la poussée d'Archimède égale au volume déplacé dudit aubage. Cette diminution de poids de l'aubage pendulaire est compensée par la force centrifuge. La vitesse angulaire de la roue pendulaire est donc plus élevée que la roue classique de diamètre D.

Or, on a :

$$\text{Puissance} = \text{Couple} \times \omega \quad (4).$$

A puissance égale, le couple varie de façon inversement proportionnelle à la vitesse de rotation.

En conséquence, le couple, et partant l'effort, sur la machine à aubages pendulaires de l'invention est 2,6 fois plus petit que dans la roue classique. Ceci est un avantage appréciable. En effet, le dimensionnement des axes à la torsion est directement fonction du couple. A puissance donnée, la machine à aubages pendulaires permettra donc un dimensionnement plus léger et meilleur marché que dans la roue de l'état de la technique.

Du point de vue de la régulation, les roues classiques posaient un réel problème. En effet, pour une vitesse V donnée du flux, la puissance récupérable est par exemple de X kW. L'alternateur ou le récepteur de puissance est prévu et dimensionné pour la valeur X. Par exemple, si V = 2 m/s, la puissance de l'alternateur est de 100 kW.

Si pour des raisons de crues, fortes pluies, orages locaux, etc., la vitesse vient à passer à 2V, on peut montrer que la puissance récupérable est en fait multipliée par 8 (soit $2^3$).

Pour reprendre l'exemple précis, si la vitesse passe de 2 à 4 m/sec, la puissance X passe de 100 à 800 kW. Le dimensionnement de l'alternateur est alors un problème qui se comprend aisément. La question qui se pose est alors de savoir s'il faut dimensionner celui-ci pour une vitesse habituelle et fréquente de 2 m/s, par exemple, ou plutôt pour une vitesse exceptionnelle de 4 m/sec.

En choisissant la première solution et en supposant la machine connectée au réseau électrique existant, l'alternateur de 100 kW sera rapidement hors d'usage avec une puissance d'entrée de 800 kW.

Avec la seconde solution, c'est-à-dire avec un alternateur de 800 kW, le rendement en production habituelle soit 100 kW, sera très médiocre.

Les turbines hydrauliques Kaplan, par exemple, ont souvent la possibilité de faire varier le débit via le pas variable de l'hélice ou/et du distributeur. Dans ce cas, le débit est adapté à la puissance désirée. L'invention permet d'arriver à un résultat équivalent, car sur la figure 3, on voit que plus la force $F_H$ est importante (lorsque la vitesse augmente), plus l'angle d'inclinaison $\gamma$ est important et donc plus la "valeur d'écrêtage" E de la puissance est importante. En effet, selon la relation (2), si l'angle $\gamma$ augmente, le tirant d'eau T effectif diminue, la surface utile S diminue et finalement la puissance fournie est écrêtée. Cet écrêtage est absolument nécessaire sous peine de détruire les alternateurs lorsque la vitesse V augmente.

L'aubage, son poids $P_a$, son lest $P_e$ seront donc avantageusement calculés pour que la valeur du couple $C_M$ sur la machine soit proche du couple nominal, de sorte que la roue produise une puissance la plus constante possible. La régulation automatique de la puissance est donc un atout majeur de la présente invention.

Selon une forme d'exécution alternative de l'invention, on peut également réaliser des roues hydrauliques avec des aubages oscillants très légèrement lestés. Dans ce cas, les aubages pivotent autour d'un point proche du centre de gravité, en fait un point situé légèrement au-dessus du centre de gravité de l'aubage, comme le montre la figure 5. Dans ce cas l'aubage peut être construit de façon aussi légère que possible.

La figure 6 montre une section de roue à 6 aubages 1' tandis que la figure 7 montre une section de roue à 3 aubages 1'. Dans les figures 6 et 7, les aubages ne s'inclinent pas pendant la phase où ils sont sous l'eau, contrairement au cas décrit plus haut. Les forces hydrauliques $F_H$ (Fig. 5) sont équilibrées de part et d'autre de l'axe de rotation dudit aubage.

Cette solution réduit le lest et permet donc de réaliser des machines plus légères. Par contre, l'écrêtage de la puissance est inexistant puisque les aubages pendulaires restent verticaux durant leur phase de travail.

Selon encore une autre forme d'exécution préférée de l'invention, l'aubage pendulaire peut également être réalisé en 2, 3, ... panneaux articulés, comme le seraient les maillons d'une chaîne. Ceci permet donc de réaliser des aubages à double articulation. Le premier panneau constituant l'aubage doit être réalisé le plus légèrement possible tandis que l'aubage le plus écarté de l'axe de rotation 2 doit être le plus pondéreux possible.

Dans une forme encore avantageuse, l'aubage peut être composé d'une toile souple en matière synthétique résistante (polyester, Kevlar® , etc.). Le contrepoids de cet aubage souple est placé dans une alvéole réalisée dans la toile synthétique comme le montre la figure 8.


**Revendications**

**1.** Machine hydraulique flottante, utilisable sur fleuve ou rivière, pour transformer l'énergie cinétique d'un flux d'eau en énergie mécanique, électrique ou autre, comprenant au moins un flotteur (3) pouvant être amarré solidement dans le courant du fleuve ou de la rivière, ledit flotteur (3) portant un palier recevant un arbre (2) d'une roue à aubes (1) entraînée par la force du courant, **caractérisée en ce qu'**elle comprend une structure rigide inscrite dans un cylindre de diamètre donné (d) supportant des paliers d'articulation (P) situés à la distance du rayon dudit cylindre (R = d/2), sur lesquels sont montés pivotants des aubages pendulaires (1, 1'), via un arbre (2') solidaire de chaque aubage (1, 1'), lesdits aubages (1, 1') étant en outre affectés d'un lest pondéreux ($P_e$) de densité supérieure à celle de l'eau.

**2.** Machine hydraulique selon la revendication 1, **caractérisée en ce que** l'arbre (2') solidaire de chaque aubage (1) est essentiellement situé à une extrémité de celui-ci.

**3.** Machine hydraulique selon la revendication 2, **caractérisée en ce que** ledit lest pondéreux ($P_e$) est disposé à l'extrémité de l'aubage opposée à celle où se trouve ledit arbre (2') solidaire de l'aubage (1).

**4.** Machine hydraulique, selon la revendication 2 ou 3, **caractérisée en ce que** les aubages pendulaires (1) soumis à la gravité sont configurés pour que le rapport entre la hauteur émergée de la machine et le tirant d'eau (H/T) soit le plus petit possible.

**5.** Machine hydraulique, selon la revendication 2, 3 ou 4, **caractérisée en ce que**, à l'équilibre en rotation dans le flux, lesdits aubages (1, A2), en pivotant autour de leur axe (2'), forment un angle ($\gamma$) avec la verticale qui est directement fonction des efforts hydrauliques ($F_H$) produits par ledit flux.

**6.** Machine hydraulique selon l'une quelconque des revendications 2 à 5, **caractérisée en ce qu'**elle comprend n roues et (n+1) flotteurs (n $\geq$ 1), les flotteurs étant de préférence disposés de part et d'autre de chaque roue à aubes.

**7.** Machine hydraulique selon la revendication 6, **caractérisée en ce que** chaque roue à aubes comprend m (m > 2), de préférence 6, aubages pendulaires (1) dont les paliers (P) sont disposés aux sommets d'un polygone régulier.

**8.** Machine hydraulique selon la revendication 7, **caractérisée en ce qu'**elle comprend n roues de m aubages chacune, deux roues successives étant décalées de $\dfrac{360°}{m \ . \ n}$.

**9.** Machine hydraulique selon la revendication 1, **caractérisé en ce que** l'arbre (2') solidaire de chaque aubage (1') est essentiellement situé légèrement au-dessus du centre de gravité de l'aubage (1').

**10.** Machine hydraulique selon l'une quelconque des revendications précédentes, **caractérisée en ce qu'**elle comprend un déviateur frontal (4) pour dévier les déchets et débris flottant au fil de l'eau.

**11.** Machine hydraulique selon la revendication 10, **caractérisée en ce que** qu'elle comprend un point d'ancrage au niveau de la partie la plus avant de ce déviateur frontal (4) pour la fixation d'un câble d'amarrage (5).

**12.** Machine hydraulique selon l'une quelconque des revendications précédentes, **caractérisée en ce que** la roue à aubes est couplée à un récepteur de puissance qui est un alternateur, une pompe ou un engin de levage.

**13.** Machine hydraulique selon l'une quelconque des revendications précédentes, **caractérisée en ce que** les flotteurs (3) sont réalisés en acier, en plastique ou toute autre matière permettant de réaliser une poussée d'Archimède suffisante pour compenser le poids de la roue hydraulique.

**14.** Machine hydraulique selon l'une quelconque des revendications précédentes, **caractérisée en ce que** le lest ($P_e$) est réalisé en acier, plomb, béton lourd, béton armé ou en tungstène.

**15.** Machine hydraulique selon l'une quelconque des revendications précédentes, **caractérisée en ce que** les aubages sont réalisés en métal, de préférence l'acier ou l'aluminium, en bois, en plastique ou en matériau composite.

**16.** Machine hydraulique selon la revendication 15, **caractérisée en ce que** chaque aubage est réalisé en matière synthétique souple, de préférence en Kevlar® ou polyester, comprenant une alvéole où est logé ledit lest ($P_e$), du côté opposé au palier d'articulation de l'aubage.

**Revendications modifiées conformément à la règle 86(2) CBE.**

**1.** Machine hydraulique flottante, utilisable sur fleuve ou rivière, pour transformer l'énergie cinétique d'un flux d'eau en énergie mécanique, électrique ou autre, comprenant au moins un flotteur (3) pouvant être amarré solidement dans le courant du fleuve ou de la rivière, ledit flotteur (3) portant un palier recevant un arbre horizontal (2) d'une roue à aubes (1) entraînée par la force du courant, **caractérisée en ce qu'**elle comprend une structure rigide inscrite dans un cylindre de diamètre donné (d) supportant des paliers d'articulation (P) situés à la distance du rayon dudit cylindre (R = d/2), sur lesquels sont montés pivotants des aubages pendulaires (1, 1'), via un arbre (2') solidaire de chaque aubage (1, 1'), lesdits aubages (1, 1') étant en outre affectés d'un lest pondéreux ($P_e$) de densité supérieure à celle de l'eau, l'arbre (2') solidaire de chaque aubage (1, 1') étant essentiellement situé à une extrémité de celui-ci et ledit lest pondéreux ($P_e$) étant disposé à l'extrémité de l'aubage opposée à celle où se trouve ledit arbre (2') solidaire de l'aubage (1, 1'),

**2.** Machine hydraulique selon la revendication 1, **caractérisée en ce que** les aubages pendulaires (1) soumis à la gravité sont configurés pour que le rapport entre la hauteur émergée de la et le tirant d'eau (H/T) soit le plus petit possible.

**3.** Machine hydraulique selon la revendication 1 ou 2, **caractérisée en ce que**, à l'équilibre en rotation dans le flux, lesdits aubages (1, A2), en pivotant autour de leur axe (2'), forment un angle ($\gamma$) avec la verticale qui est directement fonction des efforts hydrauliques ($F_H$) produits par ledit flux.

**4.** Machine Hydraulique selon l'une quelconque des revendications 1 à 3, **caractérisée en ce qu'**elle comprend n roues et (n+1) flotteurs (n $\geq$ 1), les flotteurs étant de préférence disposés de part et d'autre de chaque roue à aubes.

**5.** Machine hydraulique selon la revendication 4, **caractérisée en ce que** chaque roue aubes comprend m (m > 2), de préférence 6, aubages pendulaires (1) dont les paliers (P) sont disposés aux sommets d'un polygone régulier.

**6.** Machine hydraulique selon la revendication 5, **caractérisée en ce qu'**elle comprend n roues de m aubages chacune, deux roues successives étant décalées de $\dfrac{360°}{m \: . \: n}$ .

**7.** Machine hydraulique selon la revendication 1, **caractérisé en ce que** l'arbre (2') solidaire de chaque aubage (1') est essentiellement situé légèrement au-dessus du centre de gravité de l'aubage (1').

**8.** Machine hydraulique selon l'une quelconque des revendications précédentes, **caractérisée en ce qu'**elle comprend un déviateur frontal (4) pour dévier les déchets et débris flottant au fil de l'eau.

**9.** Machine hydraulique selon la revendication 8, **caractérisée en ce que** qu'elle comprend un point d'ancrage au niveau de la partie la plus avant de ce déviateur frontal (4) pour la fixation d'un câble d'amarrage (5).

**10.** Machine hydraulique selon l'une quelconque des revendications précédentes, **caractérisée en ce que** la roue à aubes est couplée à un récepteur de puissance qui est un alternateur, une pompe ou un engin de levage.

**11.** Machine hydraulique selon l'une quelconque des revendications précédentes, **caractérisée en ce que** les flotteurs (3) sont en acier, en plastique ou toute autre matière permettant de réaliser une poussée d'Archimède suffisante pour compenser le poids de la roue hydraulique.

**12.** Machine hydraulique selon l'une quelconque des revendications précédentes, **caractérisée en ce que** le lest ($P_e$) est réalisé en acier, plomb, béton lourd, béton armé ou en tungstène.

**13.** Machine hydraulique selon l'une quelconque des revendications précédentes, **caractérisée en ce que** les aubages sont réalisés en métal, de préférence l'acier ou l'aluminium, en bois, en plastique ou en matériau composite.

**14.** Machine hydraulique selon la revendication 13, **caractérisée en ce que** chaque aubage est réalisé en matière synthétique souple, de préférence en Kevlar® ou polyester, comprenant une alvéole où est logé ledit lest ($P_e$), du côté opposé au palier d'articulation de l'aubage.

Ø 16 m = D

13 m

A0

A1

A2

A3

A4

$\alpha_1$

$\beta_4$

Niveau d'eau

V

T

fig 1

9

fig 2.a

fig 2.b

Ø 16 m = D
13 m
6 m
8 m
Niveau de l'eau
V
T = 3 m
4,18 m
Ø 6 m = d
4,5 m
1,5 m
R 3 m
1,5 m
V

**fig 2.c**

fig 3

fig 4

fig 5

fig 6

fig 7

fig 8

**Office européen
des brevets**

**RAPPORT DE RECHERCHE EUROPEENNE**

Numéro de la demande

EP 04 44 7286

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DE 20 775 C (FIGGE) 15 juin 1882 (1882-06-15) | 1,9, 12-16 | F03B17/06 |
| Y | * le document en entier * | 2,3,5,10 | |
| X | GB 289 499 A (WILLIAM BARNES SHEPPARD; JAMES HERBERT SHEPPARD; WILLIAM RAYMOND SHEPP) 30 avril 1928 (1928-04-30) * page 4, ligne 39 - page 5, ligne 34 * * figures 1,6 * | 1,12-15 | |
| Y | US 2 047 689 A (KAMMER WILLIAM FRANK) 14 juillet 1936 (1936-07-14) * page 3, colonne de gauche, ligne 17 - ligne 33 * | 2,3,5 | |
| Y | GB 2 223 063 A (ALLEN ROYSTON HOWARD * BISSEX) 28 mars 1990 (1990-03-28) * page 3, ligne 69 - ligne 77 * * figure 1 * | 10 | |
| A | WO 94/03725 A (STEPANOV, LEV ANATOLIEVISCH) 17 février 1994 (1994-02-17) * abrégé * | 1 | **DOMAINES TECHNIQUES RECHERCHES (Int.Cl.7)** F03B |
| A | US 658 968 A (WALTER) 2 octobre 1900 (1900-10-02) * page 1, ligne 35 - ligne 46 * * figure 1 * | 7,8 | |

Le présent rapport a été établi pour toutes les revendications

| Lieu de la recherche | Date d'achèvement de la recherche | Examinateur |
|---|---|---|
| La Haye | 25 mai 2005 | Steinhauser, U |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 04 44 7286

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-05-2005

| Document brevet cité au rapport de recherche | | Date de publication | Membre(s) de la famille de brevet(s) | | Date de publication |
|---|---|---|---|---|---|
| DE 20775 | C | | AUCUN | | |
| GB 289499 | A | 30-04-1928 | AUCUN | | |
| US 2047689 | A | 14-07-1936 | US | 2058591 A | 27-10-1936 |
| GB 2223063 | A | 28-03-1990 | AUCUN | | |
| WO 9403725 | A | 17-02-1994 | RU<br>AU<br>WO | 2044157 C1<br>4592193 A<br>9403725 A1 | 20-09-1995<br>03-03-1994<br>17-02-1994 |
| US 658968 | A | | AUCUN | | |

EPO FORM P0460

Pour tout renseignement concernant cette annexe : voir Journal Officiel de l'Office européen des brevets, No.12/82